# EUROPEAN PATENT APPLICATION

(11) **EP 3 686 389 A1**
(43) Date of publication of application: **29.07.2020**
(21) Application number: 17925697.9
(22) Date of filing: 26.12.2017
(51) Int. Cl.: E05F 15/619, E05F 7/08, E05C 19/00, E06B 7/28

(54) **DRIVE DEVICE FOR INNER SWINGING DOOR**

(30) Priority: 20.09.2017 CN 201710853347
(71) Applicant: Nanjing Kangni Mechanical & Electrical Co., Ltd., Nanjing, Jiangsu 211100 (CN)
(72) Inventor: SHI, Xiang, Nanjing Jiangsu 211100 (CN); WEI, Yuncheng, Nanjing Jiangsu 211100 (CN); WANG, Xianmin, Nanjing Jiangsu 211100 (CN); XU, Songnan, Nanjing Jiangsu 211100 (CN); SHI, Xudong, Nanjing Jiangsu 211100 (CN); ZU, Wenkai, Nanjing Jiangsu 211100 (CN); CHENG, Menghua, Nanjing Jiangsu 211100 (CN)
(74) Representative: Hanna Moore + Curley
(86) International application number: PCT/CN2017/118522
(87) International publication number: WO 2019/056637

(57) **Abstract**

The present disclosure discloses an inward-swing door driving device, including a motor, a worm wheel and worm reducer driven by the motor, a positive clutch, an unlocking cylinder and an unlocking connecting mechanism. The positive clutch includes an inner tooth, an outer tooth and an elastic element. The inner tooth is in transmission connection with the worm wheel and worm reducer, and the outer tooth is in coaxial transmission with a door shaft of an inward-swing door. The unlocking cylinder includes a cylinder push rod. One end of the unlocking connecting mechanism is in contact with the end portion of the cylinder push rod, and the other end of the unlocking connecting mechanism is connected with the inner tooth. When air is fed into the unlocking cylinder, the cylinder push rod pushes the unlocking connecting mechanism, and the unlocking connecting mechanism drives the inner tooth to mesh with the outer tooth and compress the elastic element. When the air in the unlocking cylinder is discharged, the inner tooth and the outer tooth demesh under the action of resilience force of the elastic element. The driving device of the present disclosure uses a modularization design, so that the driving device has a small number of parts, and is simple in structure, convenient to assemble, small in volume, good in applicability, more reliable in locking and good in mechanism stability.

## Description

### Technical Field

The present disclosure relates to a city public transport vehicle door driving device, and more particularly relates to an inward-swing door driving device.

### Background Art

Existing inward-swing door driving devices for coaches and buses usually use couplings or crank connecting rods to realize transmission of cylinders and door shafts, which is low in transmission efficiency, high in power without energy conservation and environmental protection. In addition, two door leaves of some door systems must be linked. In an emergency, if one door leaf is blocked, the other door leaf cannot be opened either, causing great safety hazards, and a driver cannot know a location and a cause of a fault when the fault occurs, which causes inconvenience in troubleshooting and recovery.

Furthermore, the existing inward-swing door driving device still has the defects of a large number of parts, low stability, complicated structure, large volume, large occupation of an air duct space, and small scope of application, and partial mechanisms that use cylinders for locking and unlocking are low in reliability and low in cylinder utilization efficiency. A connection way of driving mechanisms and vertical columns is low in reliability. Open-in-place and close-in-place switches are mostly integrated, which is not favorable for debugging and maintenance.

### Summary of the Invention

Invention objective: For the defects in the prior art, the present disclosure aims to provide an inward-swing door driving device which is relatively high in transmission efficiency, small in volume and easy to maintain.

Technical solution: An inward-swing door driving device includes a motor, a worm wheel and worm reducer driven by the motor, a positive clutch, an unlocking cylinder and an unlocking connecting mechanism. The positive clutch includes an inner tooth, an outer tooth and an elastic element. The inner tooth is in transmission connection with the worm wheel and worm reducer, and the outer tooth is in coaxial transmission with a door shaft of an inward-swing door. The unlocking cylinder includes a cylinder push rod. One end of the unlocking connecting mechanism is in contact with the end portion of the cylinder push rod, and the other end of the unlocking connecting mechanism is connected with the inner tooth. When air is fed into the unlocking cylinder, the cylinder push rod pushes the unlocking connecting mechanism, and the unlocking connecting mechanism drives the inner tooth to mesh with the outer tooth and compress the elastic element. When the air in the unlocking cylinder is discharged, the inner tooth and the outer tooth demesh under the action of resilience force of the elastic element.

Further, the worm wheel and worm reducer includes a worm wheel and a worm being in transmission connection. The worm is connected with the power output end of the motor, and the worm wheel is in coaxial transmission with the inner tooth of the positive clutch.

Further, the unlocking connecting mechanism includes a shifting fork body. The shifting fork body includes a fork claw and a fork shaft. The fork claw is hinged with a rotatable sliding ring. The sliding ring is connected with the inner tooth through a thrust ball bearing and a retainer ring, and the fork shaft is in contact with the end portion of the cylinder push rod.

Further, the worm wheel and worm reducer is mounted in a shell, and the fork shaft is connected with a shifting fork support for supporting. The shifting fork support is fixed at the top portion of the shell.

Further, the positive clutch is fixed on a mounting plate through a bearing pedestal, and the shell of the worm wheel and worm reducer is connected with the bearing pedestal.

Further, a door controller is further included. A switch component is further arranged on the bearing pedestal. A travel switch pulling ring is arranged on the outer tooth. When the door is closed in place, the travel switch pulling ring triggers the switch component, and the switch component sends a close-in-place signal to the door controller.

Further, the motor is a planetary reducing motor. The motor is connected with a motor hall switch. The motor hall switch detects a position signal of the motor, and transmits the position signal to the door controller in real time. The door controller further monitors a current change of the motor. The door controller determines whether a door leaf is blocked in the door opening and closing processes according to the position signal and the current change of the motor.

Further, the positive clutch is a jaw clutch, and the elastic element is a spring.

Further, deep groove ball bearings used for radial positioning, and a shaft retainer ring and a hole retainer ring used for axial positioning are arranged on the outer tooth.

Further, the outer tooth is connected with the door shaft of the inward-swing door through a spline shaft.

Beneficial effects: the driving device of the present disclosure uses a modularization design, has a small number of parts, and is simple in structure, convenient to assemble, small in volume and good in applicability. All the components are assembled on the mounting plate, and the mounting plate can be fixed on a vehicle body through a transitional bracket, so that the driving device can adapt to vehicle bodies with different structures by changing the transitional structure. By the adoption of the positive clutch, unlocking is conveniently and reliably. The cylinder is used to realize locking and unlocking, so as to satisfy remote emergency unlocking of a driver. The worm wheel and worm reducer used has a self-locking function, so that locking in the whole process can be realized. The spline shaft is used to connect with a vertical column, so that torque transmission is reliable, and the maintenance is convenient.

### Brief Description of the Drawings

- Fig. 1: is a schematic structure diagram of the present disclosure;
- Fig. 2: is a schematic internal structure diagram of the present disclosure;
- Fig. 3: is a cutaway view of a jaw clutch;
- Fig. 4: is a cutaway view of a worm wheel and worm reducer;
- Fig. 5: is a schematic diagram of a shifting fork body; and
- Fig. 6: is a schematic diagram of a motor.

### Detailed Description of the Invention

The technical solutions are described in detail below through an optimal embodiment and in combination with the accompanying drawings.

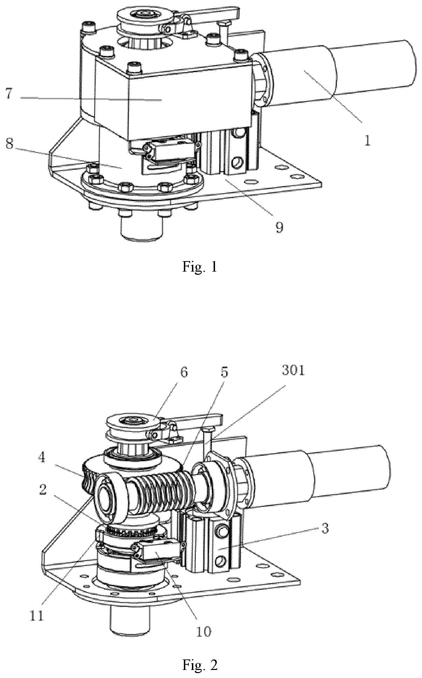

As shown in Figs. 1 and 2, an inward-swing door driving device is provided, which is used for driving an inward-swing door to open/close. The inward-swing door driving device includes a planetary reducing motor, a worm wheel and worm reducer driven by the motor 1, a positive clutch 2, an unlocking cylinder 3, an unlocking connecting mechanism and a door controller. The positive clutch 2 includes a jaw clutch, a gear clutch and the like. In the present embodiment, the positive clutch 2 is the jaw clutch.

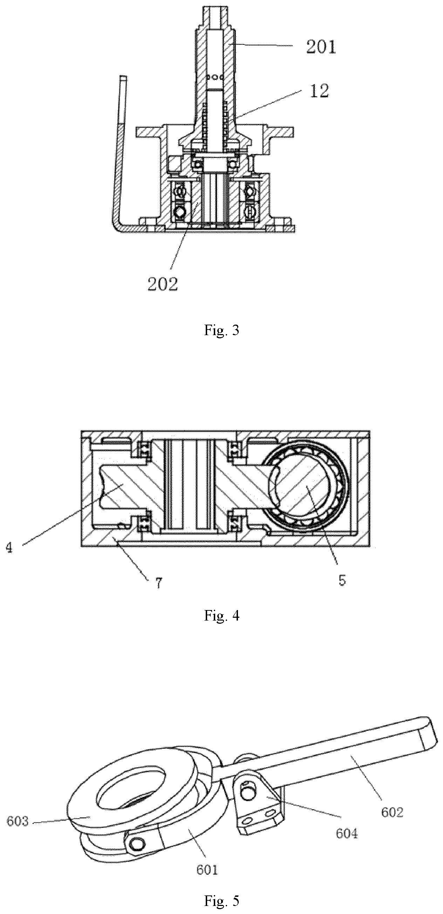

As shown in Fig. 3, the jaw clutch is fixed on a mounting plate 9 through a bearing pedestal 8. Specifically, the bearing pedestal 8 is fixed on the mounting plate 9 through a screw. The jaw clutch includes an inner tooth 201, an outer tooth 202 and an elastic element 12. The inner tooth 201 is in transmission connection with the worm wheel and worm reducer, and the outer tooth 202 is connected with a door shaft of the inward-swing door through a spline shaft, and is in coaxial transmission with the door shaft of the inward-swing door.

Deep groove ball bearings, a shaft retainer ring and a hole retainer ring are arranged on the outer tooth 202. The outer tooth 202 is radially positioned through cooperation of two deep groove ball bearings, and is axially positioned through the shaft retainer ring, the hole retainer ring, a shaft shoulder on the outer tooth 202 and the deep groove ball bearings.

The unlocking cylinder 3 includes a cylinder push rod 301. One end of the unlocking connecting mechanism is in contact with the end portion of the cylinder push rod 301, and the other end of the unlocking connecting mechanism is connected with the inner tooth 201. When air is fed into the unlocking cylinder 3, the cylinder push rod 301 pushes the unlocking connecting mechanism, and the unlocking connecting mechanism drives the inner tooth 201 to mesh with the outer tooth 202 and compress the elastic element 12. When the air in the unlocking cylinder 3 is discharged, the inner tooth 201 and the outer tooth 202 demesh under the action of resilience force of the elastic element 12. In the present embodiment, the elastic element 12 is a rectangular spring.

As shown in Fig. 4, the worm wheel and worm reducer includes a worm wheel 4 and a worm 5 which are in transmission connection. A lead angle for meshing of the worm wheel 4 and the worm 5 is less than 3.5 degrees, so that the worm wheel and worm reducer has a self-locking function, and locking in the whole process at any position during door opening and closing may be realized. The worm 5 is connected with the power output end of the motor 1, and the worm wheel 4 is in coaxial transmission with the inner tooth 201 of the jaw clutch. The worm wheel and worm reducer is mounted in a shell 7. A fork shaft 602 is connected with a shifting fork support 604 for supporting. The shifting fork support 604 is fixed at the top portion of the shell 7. The shell 7 of the worm wheel and worm reducer is connected with the bearing pedestal 8.

As shown in Fig. 5, in the present embodiment, the unlocking connecting mechanism uses a structure of a shifting fork body 6. The shifting fork body 6 includes a fork claw 601 and the fork shaft 602. The fork claw 601 is hinged with a rotatable sliding ring 603. The sliding ring 603 is connected with the inner tooth 201 through a thrust ball bearing and a retainer ring, and the fork shaft 602 is in contact with the end portion of the cylinder push rod 301.

Specifically, when air is fed into the unlocking cylinder 3, the cylinder push rod 301 upwards pushes the fork shaft 602 of the shifting fork body 6, so that the fork shaft 602 moves upwards, and the fork claw 601 moves downwards. The fork claw 601 drives the inner tooth 201 to downwards mesh with the outer tooth 202 and compress the rectangular spring. When the air in the unlocking cylinder 3 is discharged, the inner tooth 201 and the outer tooth 202 demesh under the action of resilience force of the rectangular spring.

A switch component 10 is further arranged on the bearing pedestal 8. A travel switch pulling ring 11 is arranged on the outer tooth 202. The travel switch pulling ring 11 is mounted on the outer tooth 202 of the clutch through a fastening screw. When the door is closed in place, the travel switch pulling ring 11 triggers the switch component 10, and the switch component 10 sends a close-in-place signal to the door controller.

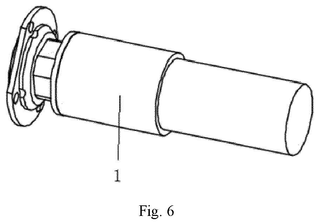

As shown in Fig. 6, the planetary reducing motor further includes a flange. The motor 1 is connected with a motor hall switch. The motor hall switch detects a position signal of the motor, and transmits the position signal to the door controller in real time. The door controller further monitors a current change of the motor. The door controller determines whether a door leaf is blocked in door opening and closing processes according to the position signal and the current change of the motor. A microswitch is mounted at an open-in-place position of the inward-swing door. The microswitch is connected with the door controller. The door controller determines whether the door is opened in place according to a current signal and a signal of the microswitch.

The working principles of the present disclosure during door opening/door closing/emergency unlocking are as follows.

### 1. Electrically-operated door opening:

When the door is in a closed state, air is fed into the unlocking cylinder 3, the cylinder push rod 301 upwards pushes the fork shaft 602 of the shifting fork body 6, so that the fork shaft 602 moves upwards, and the fork claw 601 moves downwards. The fork claw 601 drives the inner tooth 201 to downwards mesh with the outer tooth 202 and compress the rectangular spring. The planetary reducing motor rotates clockwise to drive the meshed worm 5 and worm wheel 4, thereby driving the inner tooth 201 connected with the worm wheel 4 through a spline and the outer tooth 202 meshed with the inner tooth 201 to rotate. The outer tooth 202 drives the door shaft connected with the outer tooth 202 through a spline to rotate, and then the vertical column rotates, so that the door leaf executes a door opening action along with the rotation of the vertical column.

### 2. Electrically-operated door closing:

When the door is in an open state, air is fed into the unlocking cylinder 3, the cylinder push rod 301 upwards pushes the fork shaft 602 of the shifting fork body 6, so that the fork shaft 602 moves upwards, and the fork claw 601 moves downwards. The fork claw 601 drives the inner tooth 201 to downwards mesh with the outer tooth 202 and compress the rectangular spring. The planetary reducing motor rotates anticlockwise to drive the meshed worm 5 and worm wheel 4, thereby driving the inner tooth 201 connected with the worm wheel 4 through a spline and the outer tooth 202 meshed with the inner tooth 201 to rotate. The outer tooth 202 drives the door shaft connected with the outer tooth 202 through a spline to rotate, and then the vertical column rotates, so that the door leaf executes a door closing action along with the rotation of the vertical column.

After the door is closed in place, the travel switch pulling ring 11 mounted on the outer tooth 202 through the fastening screw triggers the switch component 10, and transmits a close-in-place signal to the door controller; the door controller controls the motor 1 to stop running; and the motor 1 is automatically locked to complete the door closing action.

### 3. Emergency unlocking and manual door opening:

When the door is in the closed state, an emergency unlocking device is operated to cause the unlocking cylinder 3 to discharge the air, and a cylinder piston rod retracts. The inner tooth 201 and the outer tooth 202 demesh under the action of the resilience force of the rectangular spring to realize a demesh state; and the door leaf is manually operated to complete the door opening action.

### 4. Manual door closing:

When the door is in the open state, the emergency unlocking device is operated to cause the unlocking cylinder 3 to discharge the air, and the cylinder piston rod retracts. The inner tooth 201 and the outer tooth 202 demesh under the action of the resilience force of the rectangular spring to realize a demesh state; and the door leaf is manually operated to complete the door closing action.

The above is only a preferred implementation mode of the present disclosure. It should be noted that those of ordinary skill in the art can further make several improvements and retouches without departing from the principle of the present disclosure. These improvements and retouches shall all fall within the protection scope of the present disclosure.

## Claims

1. An inward-swing door driving device, comprising a motor (1), a worm wheel and worm reducer driven by the motor (1), a positive clutch (2), an unlocking cylinder (3) and an unlocking connecting mechanism, wherein the positive clutch (2) comprises an inner tooth (201), an outer tooth (202) and an elastic element (12); the inner tooth (201) is in transmission connection with the worm wheel and worm reducer, and the outer tooth (202) is in coaxial transmission with a door shaft of an inward-swing door; the unlocking cylinder (3) comprises a cylinder push rod (301); one end of the unlocking connecting mechanism is in contact with the end portion of the cylinder push rod (301), and the other end of the unlocking connecting mechanism is connected with the inner tooth (201); when air is fed into the unlocking cylinder (3), the cylinder push rod (301) pushes the unlocking connecting mechanism, and the unlocking connecting mechanism drives the inner tooth (201) to mesh with the outer tooth (202) and compress the elastic element (12); and when the air in the unlocking cylinder (3) is discharged, the inner tooth (201) and the outer tooth (202) demesh under the action of resilience force of the elastic element (12).

2. The inward-swing door driving device according to claim 1, wherein the worm wheel and worm reducer comprises a worm wheel (4) and a worm (5) being in transmission connection; the worm (5) is connected with the power output end of the motor (1), and the worm wheel (4) is in coaxial transmission with the inner tooth (201) of the positive clutch (2).

3. The inward-swing door driving device according to claim 1, wherein the unlocking connecting mechanism comprises a shifting fork body (6); the shifting fork body (6) comprises a fork claw (601) and a fork shaft (602); the fork claw (601) is hinged with a rotatable sliding ring (603); the sliding ring (603) is connected with the inner tooth (201) through a thrust ball bearing and a retainer ring, and the fork shaft (602) is in contact with the end portion of the cylinder push rod (301).

4. The inward-swing door driving device according to claim 3, wherein the worm wheel and worm reducer is mounted in a shell (7); the fork shaft (602) is connected with a shifting fork support (604) for supporting; and the shifting fork support (604) is fixed at the top portion of the shell (7).

5. The inward-swing door driving device according to claim 4, wherein the positive clutch (2) is fixed on a mounting plate (9) through a bearing pedestal (8), and the shell (7) of the worm wheel and worm reducer is connected with the bearing pedestal (8).

6. The inward-swing door driving device according to claim 5, further comprising a door controller, wherein a switch component (10) is further arranged on the bearing pedestal (8); a travel switch pulling ring (11) is arranged on the outer tooth (202); when the door is closed in place, the travel switch pulling ring (11) triggers the switch component (10), and the switch component (10) sends a close-in-place signal to the door controller.

7. The inward-swing door driving device according to claim 6, wherein the motor (1) is a planetary reducing motor; the motor (1) is connected with a motor hall switch; the motor hall switch detects a position signal of the motor, and transmits the position signal to the door controller in real time; the door controller further monitors a current change of the motor; and the door controller determines whether a door leaf is blocked in the door opening and closing processes according to the position signal and the current change of the motor.

8. The inward-swing door driving device according to claim 1, wherein the positive clutch (2) is a jaw clutch, and the elastic element (12) is a rectangular spring.

9. The inward-swing door driving device according to claim 1, wherein deep groove ball bearings used for radial positioning, and a shaft retainer ring and a hole retainer ring used for axial positioning are arranged on the outer tooth (202).

10. The inward-swing door driving device according to claim 1, wherein the outer tooth (202) is connected with the door shaft of the inward-swing door through a spline shaft.
